# EUROPÄISCHE PATENTANMELDUNG

(11) **EP 1 865 217 A1**
(43) Veröffentlichungstag der Anmeldung: **12.12.2007**
(21) Anmeldenummer: 07010300.7
(22) Anmeldetag: 24.05.2007
(51) Int. Cl.: F16D 13/64

(54) **Kupplungsscheibe**

(30) Priorität: 07.06.2006 DE 102006026377
(71) Anmelder: LuK Lamellen und Kupplungsbau Beteiligungs KG, 77815 Bühl (DE)
(72) Erfinder: Häßler, Martin, 76185 Karlsruhe (DE); Mingas, Constantin, 77815 Bühl (DE)

(57) **Zusammenfassung**

Die Erfindung betrifft eine Kupplungsscheibe, insbesondere zur Verwendung mit einer Kraftfahrzeugkupplung, mit einer Mitnehmerscheibe, an der in axialer Richtung voneinander beabstandete Reibbelagelemente mit Hilfe von Federelementen befestigt sind, die jeweils mindestens einen Befestigungsabschnitt aufweisen, der an der Mitnehmerscheibe befestigt ist und durch mindestens einen Übergangsabschnitt einstückig mit mindestens einem Federabschnitt verbunden ist, der in axialer Richtung zwischen den Reibbelagelementen angeordnet ist.

Die Erfindung zeichnet sich dadurch aus, dass von dem Befestigungsabschnitt mindestens eine Federzunge ausgeht, die sich zwischen die in axialer Richtung voneinander beabstandeten Reibbelagelemente erstreckt.

## Beschreibung

Die Erfindung betrifft eine Kupplungsscheibe, insbesondere zur Verwendung mit einer Kraftfahrzeugkupplung, mit einer Mitnehmerscheibe, an der in axialer Richtung voneinander beabstandete Reibbelagelemente mit Hilfe von Federelementen befestigt sind, die jeweils mindestens einen Befestigungsabschnitt aufweisen, der an der Mitnehmerscheibe befestigt ist und durch mindestens einen Übergangsabschnitt einstückig mit mindestens einem Federabschnitt verbunden ist, der in axialer Richtung zwischen den Reibbelagelementen angeordnet ist.

Aufgabe der Erfindung ist es, eine Kupplungsscheibe gemäß dem Oberbegriff des Anspruchs 1 zu schaffen, die eine lange Lebensdauer aufweist und kostengünstig herstellbar ist.

Die Aufgabe ist bei einer Kupplungsscheibe, insbesondere zur Verwendung mit einer Kraftfahrzeugkupplung, mit einer Mitnehmerscheibe, an der in axialer Richtung voneinander beabstandete Reibbelagelemente mit Hilfe von Federelementen befestigt sind, die jeweils mindestens einen Befestigungsabschnitt aufweisen, der an der Mitnehmerscheibe befestigt ist und durch mindestens einen Übergangsabschnitt einstückig mit mindestens einem Federabschnitt verbunden ist, der in axialer Richtung zwischen den Reibbelagelementen angeordnet ist, dadurch gelöst, dass von dem Befestigungsabschnitt mindestens eine Federzunge ausgeht, die sich zwischen die in axialer Richtung voneinander beabstandeten Reibbelagelementen erstreckt. Der Begriff axial bezieht sich auf die Drehachse der Kupplungsscheibe. Vorzugsweise handelt es sich bei den Federelementen um Federsegmente, die paarweise in axialer Richtung zwischen zwei Reibbelagelementen angeordnet sind. Die Federzunge wird beim Zusammendrücken der Reibbelagelemente, wenn zum Beispiel eine mit der Kupplungsscheibe ausgestattete Kupplung geschlossen wird, zwischen den Reibbelagelementen eingespannt. Durch die Federzunge kann die Belastung in dem Übergangsabschnitt im Betrieb der Kupplungsscheibe reduziert werden. Der Übergangsabschnitt wird auch als Federsegmenthals bezeichnet. Der Befestigungsabschnitt wird auch als Federsegmentfuß bezeichnet und umfasst zum Beispiel mehrere Durchgangslöcher zur Aufnahme beziehungsweise zum Durchführen von Befestigungsmitteln, wie Nieten, mit deren Hilfe die Federelemente an der Mitnehmerscheibe befestigt sind. Der Federabschnitt ist vorzugsweise radial außerhalb des Befestigungsabschnitts angeordnet.

Ein bevorzugtes Ausführungsbeispiel der Kupplungsscheibe ist dadurch gekennzeichnet, dass von dem Befestigungsabschnitt zwei Federzungen ausgehen, die sich im Wesentlichen radial nach außen erstrecken. Der Begriff radial bezieht sich auf die Drehachse der Kupplungsscheibe. Durch die zwei Federzungen wird ein Verdrehen des Federabschnitts relativ zu dem Befestigungsabschnitt eingeschränkt. Dadurch kann die Belastung des Übergangsabschnitts unter Torsion deutlich reduziert werden.

Ein weiteres bevorzugtes Ausführungsbeispiel der Kupplungsscheibe ist dadurch gekennzeichnet, dass der Übergangsabschnitt in Umfangsrichtung mittig zwischen den Federzungen angeordnet ist. Der Übergangsabschnitt wird in Umfangsrichtung vorzugsweise von zwei gerundeten Ausnehmungen begrenzt.

Ein weiteres bevorzugtes Ausführungsbeispiel der Kupplungsscheibe ist dadurch gekennzeichnet, dass die Federzungen, bezogen auf eine in radialer Richtung verlaufende Mittellinie des Befestigungsabschnitts, symmetrisch sind. Dadurch wird in unterschiedlichen Drehrichtungen die gleiche Federwirkung der Federzungen erzielt.

Ein weiteres bevorzugtes Ausführungsbeispiel der Kupplungsscheibe ist dadurch gekennzeichnet, dass die Federzungen so ausgebildet und mit ihren Enden so angeordnet sind, dass die Federzungen beim Zusammendrücken der Reibbelagelemente, wenn zum Beispiel eine mit der Kupplungsscheibe ausgestattete Kupplung geschlossen wird, zwischen den Reibbelagelementen eingespannt werden. Vorzugsweise wirken jeweils zwei Federzungen von unterschiedlichen Federsegmenten zusammen, die paarweise in axialer Richtung zwischen zwei Reibbelagelementen angeordnet sind.

Ein weiteres bevorzugtes Ausführungsbeispiel der Kupplungsscheibe ist dadurch gekennzeichnet, dass die Federzungen von dem Befestigungsabschnitt, bezogen auf eine in radialer Richtung verlaufende Mittellinie des Befestigungsabschnitts, divergieren. Dadurch wird erreicht, dass die freien Enden der Federzungen eines Federelements in Umfangsrichtung möglichst weit voneinander beabstandet sind.

Ein weiteres bevorzugtes Ausführungsbeispiel der Kupplungsscheibe ist dadurch gekennzeichnet, dass zwischen den Federzungen, dem Übergangsabschnitt und dem Federabschnitt jeweils eine gerundete Ausnehmung ausgespart ist. Durch die gerundete Ausnehmung werden sanfte Übergänge zwischen dem Befestigungsabschnitt und dem Übergangsabschnitt sowie dem Übergangsabschnitt und dem Federabschnitt geschaffen.

Ein weiteres bevorzugtes Ausführungsbeispiel der Kupplungsscheibe ist dadurch gekennzeichnet, dass der Federabschnitt im Anschluss an die gerundete Ausnehmung jeweils eine Federlasche aufweist. Die Federlasche wirkt so mit der zugehörigen Federzunge zusammen, dass die Federzunge beim Zusammendrücken der Reibbelagelemente zwischen diesen eingespannt wird.

Ein weiteres bevorzugtes Ausführungsbeispiel der Kupplungsscheibe ist dadurch gekennzeichnet, dass die Federlasche im Wesentlichen die Gestalt eines Dreiecks mit einer abgerundeten Spitze aufweist und sich radial nach innen erstreckt. Diese Gestalt hat sich im Rahmen der vorliegenden Erfindung als besonders vorteilhaft erwiesen.

Ein weiteres bevorzugtes Ausführungsbeispiel der Kupplungsscheibe ist dadurch gekennzeichnet, dass die Federzunge im Wesentlichen senkrecht zu einer Seite des Dreiecks verläuft, die sich zwischen der Ausnehmung und der abgerundeten Spitze des Dreiecks erstreckt. Das freie Ende der Federzunge ist von der besagten Seite des Dreiecks beabstandet.

Ein weiteres bevorzugtes Ausführungsbeispiel der Kupplungsscheibe ist dadurch gekennzeichnet, dass die Federelemente mit dem Federabschnitt, dem Übergangsabschnitt und dem Befestigungsabschnitt jeweils einstückig aus Federstahl gebildet sind. Dadurch werden eine einfache Herstellung und eine gute Federwirkung ermöglicht.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
Figur 1 einen Ausschnitt einer erfindungsgemäßen Kupplungsscheibe in der Draufsicht und
Figur 2 einen Ausschnitt der Kupplungsscheibe aus Figur 1 im Schnitt.

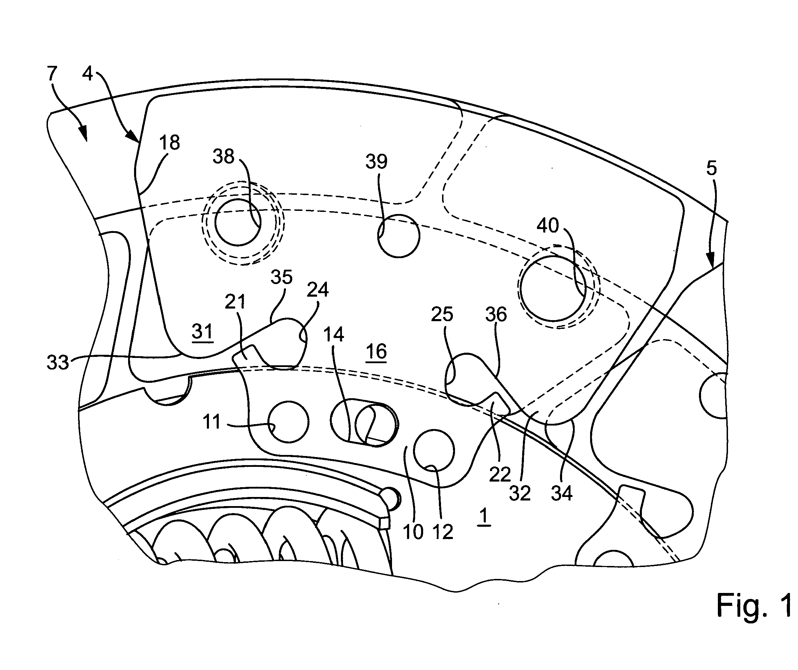

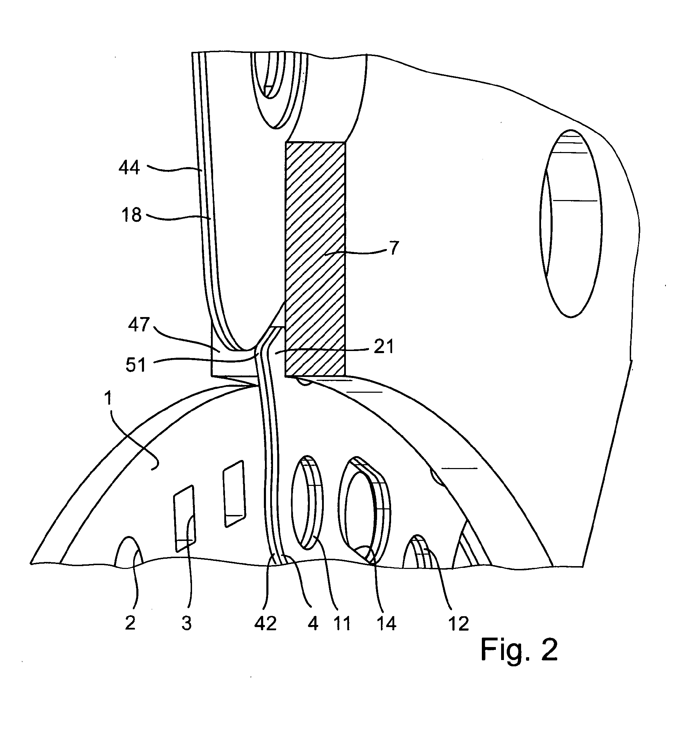

In den Figuren 1 und 2 ist eine erfindungsgemäße Kupplungsscheibe in verschiedenen Ansichten ausschnittsweise dargestellt. Die Kupplungsscheibe umfasst eine Mitnehmerscheibe 1, die radial innen eine Nabe (nicht dargestellte) mit einer Innenverzahnung aufweist. Die Innenverzahnung dient dazu, die Nabe der Mitnehmerscheibe 1 drehfest mit einer (nicht dargestellten) Getriebeeingangswelle zu verbinden. Radial außen weist die Mitnehmerscheibe 1 einen Ringflansch mit einer Vielzahl von Durchgangslöchern 2, 3 auf, die dazu dienen, Federelemente 4, 5, zum Beispiel mit Hilfe von Nieten oder herausgebogenen Laschen, an der Mitnehmerscheibe 1 zu befestigen. In Umfangsrichtung sind an der Mitnehmerscheibe 1 eine Vielzahl von Federelementen befestigt, von denen in dem Ausschnitt aus Figur 1 nur die beiden Federelemente 4, 5 sichtbar sind. Die Federelemente 4, 5 dienen zur Befestigung von Reibbelagelementen, von denen in Figur 1 nur ein Reibbelagelement 7 angedeutet ist. Die Reibbelagelemente können einteilig oder mehrteilig ausgebildet sein.

Das Federelement 4 weist, ebenso wie das Federelement 5 und die weiteren (nicht dargestellten) Federelemente, einen Befestigungsabschnitt 10 mit zwei kreisrunden Durchgangslöchern 11, 12 auf. Die kreisrunden Durchgangslöcher 11, 12 dienen zum Durchführen von Befestigungsmitteln, wie Nieten, mit denen der Befestigungsabschnitt 10 an der Mitnehmerscheibe 1 befestigbar ist. Zwischen den beiden Kreisrunden Durchgangslöchern 11, 12 ist ein Langloch 14 ausgespart.

Der Befestigungsabschnitt 10, der auch als Federsegmentfuß bezeichnet wird, ist durch einen Übergangsabschnitt 16, der auch als Federsegmenthals bezeichnet wird, mit einem Federabschnitt 18 einstückig verbunden. Zu beiden Seiten des Übergangsabschnitts 16 gehen von dem Befestigungsabschnitt 10 zwei Federzungen 21, 22 aus, die sich radial nach außen erstrecken. Zwischen den Federzungen 21, 22 und dem Übergangsabschnitt 16 ist in dem Federelement 4, das auch als Federsegment bezeichnet wird, jeweils eine gerundete Ausnehmung 24, 25 ausgespart. Die gerundeten Ausnehmungen 24, 25 erstrecken sich von den Federzungen 21, 22 bis zu jeweils einer Federlasche 31, 32.

Die Federlaschen 31, 32 haben jeweils die Gestalt eines Dreiecks, das sich von dem Federabschnitt 18 radial nach innen erstreckt und eine abgerundete Spitze 33, 34 aufweist. Zwischen der abgerundeten Spitze 33, 34 und der zugehörigen Ausnehmung 24, 25 erstreckt sich jeweils eine gerade Seite 35, 36 der Federlasche 31, 32. Die Federzungen 21, 22 verlaufen senkrecht auf die geraden Seiten 35, 36 der Federlaschen 31, 32 zu. Zwischen den freien Enden der Federzungen 21, 22 und den geraden Seiten 35, 36 der Federlaschen 31, 32 ist jeweils ein geringer Abstand vorgesehen. In dem Federabschnitt 18 sind drei Durchgangslöcher 38, 39, 40 ausgespart, die unter anderem zum Befestigen der Reibbelagelemente 7 dienen.

In Figur 2 sieht man, dass jeweils zwei Federelemente 4, 42 mit einem zugehörigen Federabschnitt 18, 44 zwischen zwei Reibbelagelementen 7, 47 angeordnet sind. Die zugehörigen Federzungen 21, 51 der Federelemente 4, 42 liegen zwischen den Reibbelagelementen 7, 47 mit ihren Enden aneinander an.

Federsegmente werden im Fußbereich gewöhnlich mit jeweils zwei Nieten an die Mitnehmerscheibe genietet. Der Federsegmentfuß ist hierbei auf den Durchmesserbereich der Vernietung mit der Mitnehmerscheibe beschränkt und weist abgesehen vom Übergang in den zentralen Segmenthals keine weiteren Bereiche auf, die in den Durchmesserbereich der Reibbeläge ragen. Insbesondere bei Konstruktionen mit geringem Abstand zwischen Mitnehmerscheibenaußen- und Reibbelaginnendurchmesser konzentrieren sich Spannungen unter Umfangsmoment, unter Umlaufbiegung bei Winkelversatz und unter Torsion des Federsegments im Bereich des in diesen Fällen kurz ausgebildeten Segmenthalses.

Durch die erfindungsgemäße Ausbildung der Federelemente 4, 5, 42 können die insgesamt auftretenden Spannungen, die in dem Übergangsabschnitt 16 unter Umfangsmoment, Winkelversatz und Torsion des zugehörigen Federabschnitts 18 auftreten, insbesondere bei Konstruktion mit geringem Abstand zwischen Mitnehmerscheibenaußen- und Reibbelaginnendurchmesser deutlich reduziert werden.

Die Federzungen 21, 22, 51 werden bei geschlossener Kupplung zwischen den Reibbelagelementen 7, 47 eingespannt. Dadurch kann ein Großteil der Belastung unter Torsion des zugehörigen Federabschnitts 18, 44 von dem zugehörigen Übergangsabschnitt (16 in Figur 1) fern gehalten werden, da ein Verdrehen der Federabschnitte 7, 47 mit den zugehörigen Reibbelagelementen 7, 47 relativ zu dem an der Mitnehmerscheibe 1 befestigten Befestigungsabschnitt durch die Federzungen 21, 22, 51 erschwert wird. Durch einen großen Abstand der Enden der Federzungen 21, 22 voneinander wird der Hebelarm des zugehörigen Kräftepaars verlängert, das der Verdrehung entgegenwirkt.

Insgesamt wir die Torsionssteifigkeit erhöht, jedoch entstehen die damit verbundenen Spannungen in Bereichen der Federelemente, die nicht gleichzeitig unter Belastung durch Umfangsmoment stehen. Darüber hinaus wird durch die erfindungsgemäßen Federzungen auch die Biegesteifigkeit erhöht. Das führt dazu, dass ein größerer Teil der unter Winkelversatz erforderlichen Deformation an anderer Stelle, zum Beispiel innerhalb der Mitnehmerscheibe, stattfindet und dadurch die Spannungen in den Übergangsabschnitten reduziert werden.

### Bezugszeichenliste

- 1.: Mitnehmerscheibe
- 2.: Durchgangsloch
- 3.: Durchgangsloch
- 4.: Federelement
- 5.: Federelement
- 7.: Reibbelagelement
- 10.: Befestigungsabschnitt
- 11.: Durchgangsloch
- 12.: Durchgangsloch
- 14.: Langloch
- 16.: Übergangsabschnitt
- 18.: Federabschnitt
- 21.: Federzunge
- 22.: Federzunge
- 24.: Ausnehmung
- 25.: Ausnehmung
- 31. Federlasche: 32. Federlasche
- 33.: Spitze
- 34.: Spitze
- 35.: Seite
- 36.: Seite
- 38.: Durchgangsloch
- 39.: Durchgangsloch
- 40.: Durchgangsloch
- 42.: Federelement
- 44.: Federabschnitt
- 47.: Reibbelagelement
- 51.: Federzunge

## Patentansprüche

1. Kupplungsscheibe, insbesondere zur Verwendung mit einer Kraftfahrzeugkupplung, mit einer Mitnehmerscheibe (1), an der in axialer Richtung voneinander beabstandete Reibbelagelemente (7,47) mit Hilfe von Federelementen (4,5,42) befestigt sind, die jeweils mindestens einen Befestigungsabschnitt (10) aufweisen, der an der Mitnehmerscheibe (1) befestigt ist und durch mindestens einen Übergangsabschnitt (16) einstückig mit mindestens einem Federabschnitt (18) verbunden ist, der in axialer Richtung zwischen den Reibbelagelementen (7,47) angeordnet ist, **dadurch gekennzeichnet, dass** von dem Befestigungsabschnitt (10) mindestens eine Federzunge (21,22,51) ausgeht, die sich zwischen die in axialer Richtung voneinander beabstandeten Reibbelagelemente (7,47) erstreckt.

2. Kupplungsscheibe nach Anspruch 1, **dadurch gekennzeichnet, dass** von dem Befestigungsabschnitt (10) zwei Federzungen (21,22) ausgehen, die sich im Wesentlichen radial nach außen erstrecken.

3. Kupplungsscheibe nach Anspruch 2, **dadurch gekennzeichnet, dass** der Übergangsabschnitt (16) in Umfangsrichtung mittig zwischen den Federzungen (21,22) angeordnet ist.

4. Kupplungsscheibe nach Anspruch 3, **dadurch gekennzeichnet, dass** die Federzungen (21,22), bezogen auf eine in radialer Richtung verlaufende Mittellinie des Befestigungsabschnitts (10), symmetrisch sind.

5. Kupplungsscheibe nach einem der Ansprüche 2 bis 4, **dadurch gekennzeichnet, dass** die Federzungen (21,22,51) so ausgebildet und mit ihren Enden so angeordnet sind, dass die Federzungen beim Zusammendrücken der Reibbelagelemente (7,47), wenn zum Beispiel eine mit der Kupplungsscheibe ausgestattete Kupplung geschlossen wird, zwischen den Reibbelagelementen eingespannt werden.

6. Kupplungsscheibe nach einem der Ansprüche 3 bis 5, **dadurch gekennzeichnet, dass** die Federzungen (21,22) von dem Befestigungsabschnitt (10), bezogen auf eine in radialer Richtung verlaufende Mittellinie des Befestigungsabschnitts, divergieren.

7. Kupplungsscheibe nach einem der Ansprüche 3 bis 6, **dadurch gekennzeichnet, dass** zwischen den Federzungen (21,22), dem Übergangsabschnitt (16) und dem Federabschnitt (18) jeweils eine gerundete Ausnehmung (24,25) ausgespart ist.

8. Kupplungsscheibe nach Anspruch 7, **dadurch gekennzeichnet, dass** der Federabschnitt (18) im Anschluss an die gerundete Ausnehmung (24,25) jeweils eine Federlasche (31,32) aufweist.

9. Kupplungsscheibe nach Anspruch 8, **dadurch gekennzeichnet, dass** die Federlasche (31,32) im Wesentlichen die Gestalt eines Dreiecks mit einer abgerundeten Spitze (33,34) aufweist und sich radial nach innen erstreckt.

10. Kupplungsscheibe nach Anspruch 9, **dadurch gekennzeichnet, dass** die Federzunge (21,22) im Wesentlichen senkrecht zu einer Seite (35,36) des Dreiecks verläuft, die sich zwischen der Ausnehmung (24,25) und der abgerundeten Spitze (33,34) des Dreiecks erstreckt.

11. Kupplungsscheibe nach einem der vorhergehenden Ansprüche, **dadurch gekennzeichnet, dass** die Federelemente (4,5) mit dem Federabschnitt (18), dem Übergangsabschnitt (16) und dem Befestigungsabschnitt (10) jeweils einstückig aus Federstahl gebildet sind.
